**Europäisches Patentamt**

**European Patent Office**

**Office européen des brevets**

(19)

(11) Veröffentlichungsnummer: **0 221 020**
**A2**

(12) **EUROPÄISCHE PATENTANMELDUNG**

(21) Anmeldenummer: **86810447.2**

(22) Anmeldetag: **09.10.86**

(51) Int. Cl.⁴: **F 16 B 13/14**

(30) Priorität: **26.10.85 DE 3538145**

(43) Veröffentlichungstag der Anmeldung: **06.05.87**
**Patentblatt 87/19**

(84) Benannte Vertragsstaaten: **CH DE FR LI SE**

(71) Anmelder: **HILTI Aktiengesellschaft, FL-9494 Schaan (LI)**

(72) Erfinder: **Mauthe, Peter, Vöestweg 10, D-8065 Kleinberghofen (DE)**

(74) Vertreter: **Wildi, Roland, Hilti Aktiengesellschaft Patentabteilung, FL-9494 Schaan (LI)**

(54) **Patrone für aushärtende Massen.**

㊗ Die Patrone (10) weist eine als Faltenbalg (11) ausgebildete Zylinderwandung auf, welche in axialer Richtung verformbar ist. Die Falten des Faltenbalges (11) erstrecken sich in Umfangsrichtung. Nach dem Zerstören des Innenbehälters (12) wird das in der Patrone (10) enthaltene Bindemittel (13) mit dem im Innenbehälter (12) enthaltenen Anmachwasser vermischt. Beim Eintreiben einer Ankerstange (30) in die Patrone (10) wird der Faltenbalg (11) je nach dem Durchmesser der Ankerstange (30) von der Hülse (15) getrennt und unter Herauspressen der Masse im Bohrlochgrund (22) zusammengestaucht oder in axialer Richtung gestreckt und gegen die Wandung des Bohrloches (21) gepresst.

EP 0 221 020 A2

*1*

HILTI AKTIENGESELLSCHAFT IN SCHAAN
Fürstentum Liechtenstein

Patrone für aushärtende Massen

Die Erfindung betrifft eine Patrone zur Aufnahme von Komponenten einer dem Verankern von Ankerstangen in Bohrlöchern dienenden, aushärtenden Masse, wobei die Komponenten in einem als Faltenbalg ausgebildeten Behälter angeordnet sind, dessen Falten sich in Umfangsrichtung erstrecken und der an seinem rückwärtigen Ende mit einer zylindrischen Hülse verbunden ist.

Zur Verankerung von Ankerstangen sind hydraulische Systeme bekannt, die unter Volumenszunahme aushärten. Da diese Volumenszunahme durch die Wandung des Bohrloches behindert wird, entsteht im Bohrloch ein Spreizdruck, der sowohl gegen die Wandung des Bohrloches als auch gegen die Ankerstange wirkt und dadurch die Ankerstange im Bohrloch sichert.

Bisher war es üblich, die Komponenten solcher Massen, dh das hydraulische Bindemittel und die flüssige Komponente manuell, zum Teil auch ausserhalb des Bohrloches miteinander zu vermischen, was oft zu Fehlerquellen wie falsches Mischverhältnis, ungenügende Durchmischung oder dergleichen führt. Solche Fehler können zu Ausfällen oder zum Herausdrücken der Masse aus dem Bohrloch führen. Zudem sind Arbeiten über Kopf sehr problematisch, da sich gezeigt hat, dass zur Erzielung des gewünschten Druckaufbaues eine vollständige Verfüllung des Bohrloches vom Bohrlochgrund her zweckmässig ist.

Zur Aufnahme einer dem Verankern von Ankerstangen in Bohrlöchern dienenden Masse ist aus dem DE-GM 8 500 048 eine im wesentlichen aus zwei Teilen bestehende Patrone bekannt. Das in Setzrichtung vordere Teil der Patrone ist als Faltenbalg mit sich in Umfangsrichtung erstreckenden Falten ausgebildet. Der Faltenbalg ist an seinem rückwärtigen Ende mit einer axial verlaufende Kanäle sowie radiale Austrittsöffnungen aufweisenden Hülse verbunden. Nach dem Einsetzen der Patrone in ein Bohrloch zieht der Anwender an einem aus dem Bohrloch ragenden Bügel, dessen Enden mit dem vorderen Ende des Faltenbalges verbunden sind. Bei gleichzeitigem Festhalten der Hülse wird somit der Faltenbalg axial gestaucht und dessen Inhalt durch die Kanäle und Austrittsöffnungen der Hülse herauspresst.

Diese bekannte Patrone ist von der Handhabung her sehr umständlich. Ausserdem sind tiefe Bohrlöcher erforderlich, deren vorderer Bereich bei der fertigen Verankerung nicht genutzt wird. Ein vollständiges Verfüllen des Bohrloches vom Bohrlochgrund her ist mit dieser Patrone somit nicht möglich.

Der Erfindung liegt die Aufgabe zugrunde, eine Patrone zur Aufnahme von Komponenten einer aushärtenden Masse zu schaffen, welche eine einfache Handhabung und eine gute Verfüllung des Bohrloches ermöglicht.

Gemäss der Erfindung wird die Aufgabe dadurch gelöst, dass die Hülse an ihrem rückwärtigen Ende mit einem deren Umfangskontur überragenden, beim Einführen der Patrone in das Bohrloch als Setztiefenbegrenzung dienenden Anschlag versehen ist.

Beim Setzvorgang wird zunächst die Patrone soweit in das Bohrloch eingesetzt, bis der Anschlag an der Oberfläche des Aufnahmematerials zur Anlage gelangt. Anschliessend wird die Ankerstange direkt in die Patrone, bzw in die Hülse eingeführt. Falls die Patrone vorher nicht ganz bis zum Anschlag in das Bohrloch eingeführt worden ist, wird die Patrone dabei durch die Ankerstange um den noch fehlenden Weg mitgenommen.

Im Prinzip genügt für die Funktion ein einzelner, am Umfang der Hülse angeordneter, nockenförmiger Anschlag. Da der Rand des Bohrloches jedoch bei dessen Herstellung gelegentlich teilweise ausbricht, ist eine definierte Endlage der Patrone bei einem einzelnen, nockenförmigen Anschlag nicht gewährleistet. Es ist daher zweckmässig, den Anschlag als Ringwulst auszubilden. Ein als Ringwulst ausgebildeter Anschlag ergibt ausserdem einen sauberen Abschluss des Bohrloches und ermöglicht eine gute Abdichtung des Bohrloches gegen Austritt der aushärtenden Masse einerseits sowie gegen das Eindringen von Wasser von aussen andererseits.

Die Verankerung der Ankerstange kann im Prinzip auf zwei Arten erfolgen. Nach der ersten Art dringt die Ankerstange in den Faltenbalg ein und weitet diesen durch Verdrängung der Masse radial auf. Gleichzeitig wird der Faltenbalg auch gegen den Grund des Bohrloches hin gestreckt. Bei richtiger Dimensionierung ist der Zwischenraum zwischen der Ankerstange un der Bohrlochwandung dann vollständig ausgefüllt, wenn die Ankerstange am Grund des Bohrloches zur Anlage gelangt. Der gestreckte Faltenbalg umschliesst dabei die aushärtende Masse. Diese Ausführung verhindert, dass ein Teil der aushärtenden Masse entweichen kann.

Eine weitere vorteilhafte Ausführung besteht darin, dass der Faltenbalg mit der Hülse lösbar verbunden ist. Bei dieser Ausführung werden der Faltenbalg und die Hülse zusammen in das Bohrloch eingeführt. Beim Einsetzen der Ankerstange wird der Faltenbalg von der Hülse abgetrennt und durch die vordere Stirnseite der Ankerstange unter Herauspressen der darin angeordneten Masse gegen den Grund des Bohrloches axial zusammengestaucht. Voraussetzung für dieses Abtrennen des Faltenbalges ist dabei, dass der Innendurchmesser des Faltenbalges kleiner ist als der Aussendurchmesser der Ankerstange. Bei dieser Ausführung gelangt die aushärtende Masse direkt in Kontakt mit der Bohrlochwandung.

Der Faltenbalg enthält die Komponenten der aushärtenden Masse. Diese sollen einerseits gegen Auslaufen sowie andererseits vor äusseren Einflüssen geschützt werden. Um dies zu erreichen, ist zweckmässigerweise das rückwärtige Ende des Faltenbalges mittels einer zerstörbaren Membran verschlossen. Die Membran wird beim Einführen der Ankerstange zerstört und kann beispielsweise aus durchsichtigem Kunststoff bestehen, so dass das Einleiten des Reaktionsvorganges von aussen beispielsweise durch einen Farbumschlag ersichtlich ist. Die Membran kann sich auch dem Aussendurchmesser der sie zerstörenden Ankerstange anpassen, so dass die Patrone beim Einführen der Ankerstange nach aussen abgedichtet ist.

Die Erfindung soll nachstehend anhand der sie beispielsweise wiedergebenden Zeichnungen näher erläutert werden. Es zeigen:

Fig. 1    eine erfindungsgemässe Patrone, im Schnitt dargestellt;

Fig. 2    die Patrone gemäss Fig. 1, nach dem Zerstören
          des Innenbehälters und Einsetzen in ein Bohrloch;

Fig. 3    die Patrone gemäss Fig. 1 und 2, während des
          Eintreibvorganges der Ankerstange;

Fig. 4    eine fertige Verankerung mittels einer Patrone gemäss Fig. 1 bis 3;

Fig. 5    eine weitere Ausführung einer Patrone, im
          Schnitt dargestellt;

Fig. 6    eine in ein Bohrloch eingesetzte Patrone gemäss Fig. 5, vor dem Eintreiben der Ankerstange;

Fig. 7    eine fertige Verankerung mittels einer Patrone gemäss Fig. 5 und 6.

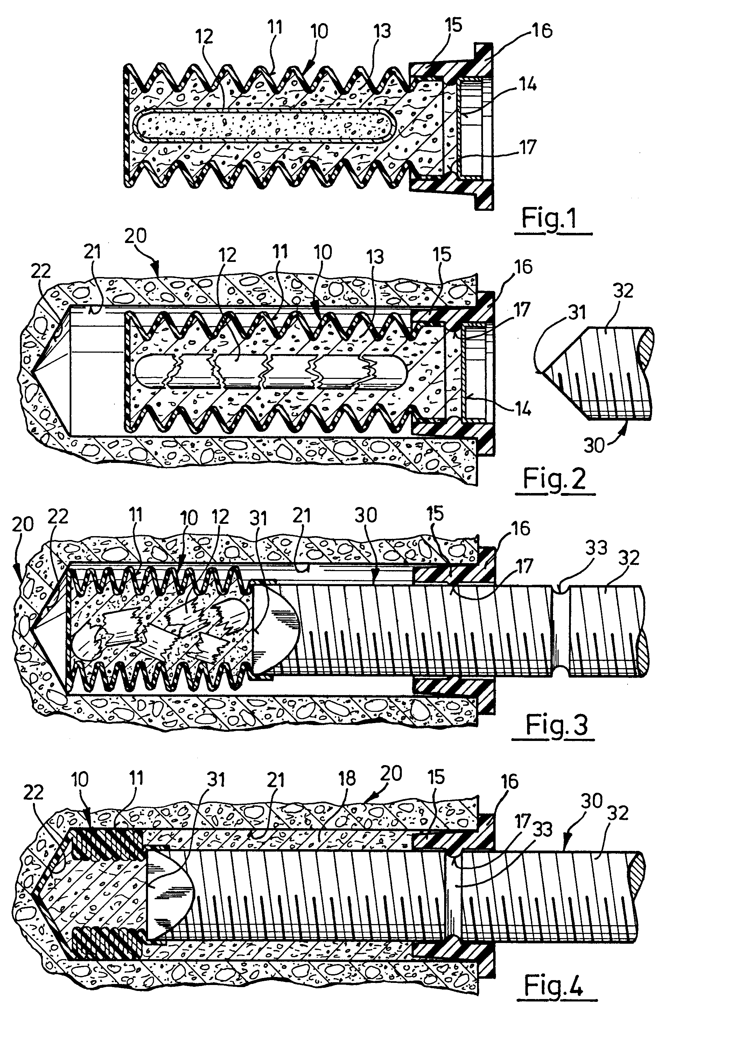

Die aus den Fig. 1 bis 4 ersichtliche, insgesamt mit 10 bebezeichnete Patrone weist einen Faltenbalg 11 mit einem darin
angeordneten Innenbehälter 12 auf. Der Innenbehälter 12 enthält das Anmachwasser für das den Innenbehälter 12 umgebende
Bindemittel 13. Der Faltenbalg 11 ist an seinem rückwärtigen
Ende durch eine Membran 14 verschlossen. Die Patrone 10 weist
ferner eine mit dem Faltenbalg 11 verbundene Hülse 15 auf.
Die Hülse 15 ist in radialer Richtung elastisch und an ihrem
rückwärtigen Ende mit einem Ringwulst 16 versehen. An ihrer
Innenseite weist die Hülse 15 ferner einen Rastvorsprung 17
auf.

Die Innenpatrone 12 kann vor dem in Fig. 2 dargestellten
Einführen der Patrone 10 in ein insgesamt mit 20 bezeichnetes Aufnahmematerial durch Biegen des Faltenbalges 11 um
seine Längsachse zerstört werden. Dies ist in Fig. 2 dargestellt. Der Ringwulst 16 dient beim Einführen der Patrone 10 in ein Bohrloch 21 eines Aufnahmematerials 20 als axialer Anschlag. Anschliessend wird eine insgesamt mit 30 bezeichnete Ankerstange in die Patrone 10 eingeführt. Die Ankerstange 30 weist an ihrem vorderen Ende eine Schneide 31 auf und ist ferner mit einem Gewinde 32 versehen. Beim Einführen der Ankerstange 30 in die Patrone 10 wird zunächst die Membran 14 zerstört.

Da der Innendurchmesser des Faltenbalges 11 geringer ist als der Aussendurchmesser der Ankerstange 30, wird der Faltenbalg 11 beim Eintreiben der Ankerstange 30 von der Hülse 15 gelöst. Dieser Zustand ist in Fig. 3 dargestellt. Der Faltenbalg 11 wird nun durch die Ankerstange 30 gegen den Bohrlochgrund 22 geschoben. Beim weiteren Eintreiben der Ankerstange 30 wird die im Faltenbalg 11 enthaltene, aushärtende Masse aus dem Faltenbalg 11 heraus in den rückwärtigen Bereich des Bohrloches 21 gepresst. Die Hülse 15 verhindert dabei einen Austritt der Masse aus dem Bohrloch 21. Die Ankerstange 30 wird soweit in das Bohrloch 21 eingeschoben, bis der Rastvorsprung 17 an der Hülse 15 in einen Einstich 33 an der Ankerstange 30 einrastet.

Dieser Zustand ist aus Fig. 4 ersichtlich. Der Faltenbalg 11 ist nun vollständig zusammengeschoben. Durch den Innendruck der aushärtenden Masse 18 wird das vordere Ende des Faltenbalges 11 gegen den Bohrlochgrund 22 gepresst. Dadurch wird erreicht, dass das Bohrloch vollständig mit aushärtender Masse 18 verfüllt wird. Durch das Einrasten des Rastvorsprunges 17 in den Einstich 33 wird die Ankerstange 30 auch bei Ueberkopfmontage im Bohrloch 21 gesichert.

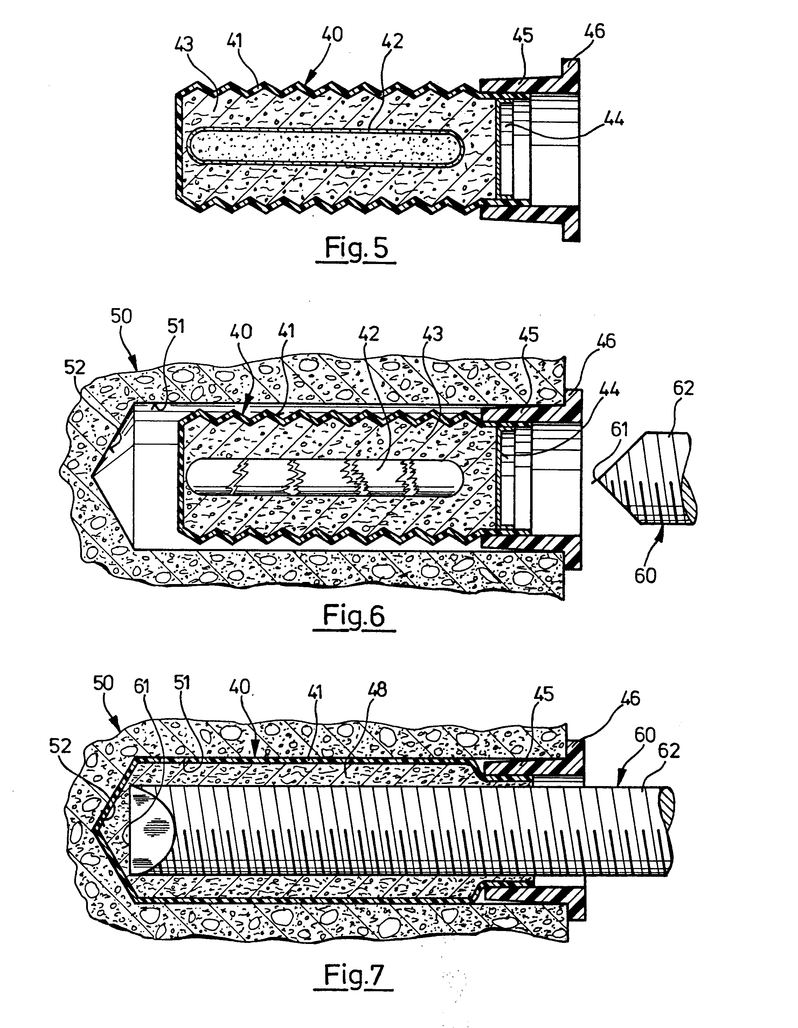

Die aus den Fig. 5 bis 7 ersichtliche, insgesamt mit 40 bezeichnete Patrone besteht ebenfalls aus einem Falgenbalg 41 und einem darin angeordneten Innenbehälter 42. Der Faltenbalg 41 enthält das Bindemittel 43 und der Innenbehälter 42 das zur Aushärtung erforderliche Anmachwasser. Der Faltenbalg 41 wird an seinem rückwärtigen Ende durch eine Membran
44 verschlossen und ist mit einer Hülse 45 fest verbunden.
Die Hülse 45 weist an Ihrem rückwärtigen Ende ebenfalls einen
Ringwulst 46 auf.

In Fig. 6 ist die Patrone 40 nach dem zuvor erfolgten Zerstören des Innenbehälters 42 bis zur Anlage des Ringwulstes
46 an der Oberfläche eines insgesamt mit 50 bezeichneten
Aufnahmematerials in ein Bohrloch 51 eingesetzt. Die Hülse
45 passt sich dabei dem Durchmesser des Bohrloches 51 an.
Nach dem Einsetzen der Patrone 40 in das Bohrloch 51 wird
eine insgesamt 60 bezeichnete Ankerstange in die Patrone 40
eingetrieben. Die Ankerstange 60 weist an ihrem vorderen
Ende eine Schneide 61 auf und ist mit einem Gewinde 62 versehen. Beim Eintreiben der Ankerstange 60 wird die Membran
44 zerstört. Die Ankerstange 60 wirkt hierauf als Verdrängungskolben, welcher den Inhalt des Faltenbalges 41 vergrössert.

Wie aus Fig. 7 ersichtlich ist, wird der Faltenbalg 41 dabei
axial gestreckt, radial gegen die Wandung des Bohrloches 51
sowie gegen den Bohrlochgrund 52 gepresst. Erfolgt beim Aushärten der Masse 48 eine Volumenszunahme, so entsteht ein
Spreizdruck, welcher einerseits den Faltenbalg 41 gegen die
Bohrlochwandung 51 presst und andererseits eine Haltekraft
der Ankerstange 60 ergibt. Die Hülse 45 dient dabei der Verdämmung der Bohrloches 51 und verhindert einen Austritt der
Masse 48 aus dem Bohrloch 51.

HILTI AKTIENGESELLSCHAFT IN SCHAAN
Fürstentum Liechtenstein


Neue Patentansprüche

1. Patrone zur Aufnahme von Komponenten einer dem Verankern von Ankerstangen in Bohrlöchern dienenden, aushärtenden Masse, wobei die Komponenten in einem als Faltenbalg ausgebildeten Behälter angeordnet sind, dessen Falten sich in Umfangsrichtung erstrecken und der an seinem rückwärtigen Ende mit einer zylindrischen Hülse verbunden ist, d a d u r c h   g e k e n n z e i c h n e t , dass die Hülse (15, 45) an ihrem rückwärtigen Ende mit einem deren Umfangskontur überragenden, beim Einführen der Patrone in das Bohrloch als Setztiefenbegrenzung dienenden Anschlag versehen ist.

2. Patrone nach Anspruch 1, dadurch gekennzeichnet, dass der Anschlag als Ringwulst (16, 46) ausgebildet ist.

3.   Patrone nach Anspruch 1 oder 2, dadurch gekennzeichnet, dass der Faltenbalg (11) mit der Hülse (15) lösbar verbunden ist.

4.   Patrone nach einem der Ansprüche 1 bis 3, dadurch gekennzeichnet, dass das rückwärtige Ende des Faltenbalges (11, 41) mittels einer zerstörbaren Membran (14, 44) verschlossen ist.

1/2　　　　　0221020

Fig.1

Fig.2

Fig.3

Fig.4

Fig.5

Fig.6

Fig.7